# EUROPÄISCHE PATENTSCHRIFT

(11) **EP 2 191 882 B1**
(45) Veröffentlichungstag und Bekanntmachung des Hinweises auf die Patenterteilung: **27.01.2016**
(21) Anmeldenummer: 09169891.0
(22) Anmeldetag: 10.09.2009
(51) Int. Cl.: B01D 46/44, B01D 46/42, B01D 46/00

(54) **VERFAHREN UND VORRICHTUNG ZUR BESTIMMUNG DES ABSCHEIDEGRADES UND/ODER ZUR DURCHFÜHRUNG EINES LECKTESTS BEI EINER FILTERANORDNUNG**
METHOD AND DEVICE FOR CALCULATING THE SEPARATION LEVEL AND/OR CARRYING OUT A LEAK TEST IN A FILTER ASSEMBLY
PROCÉDÉ ET DISPOSITIF DE DÉTERMINATION DU DEGRÉ DE SÉPARATION ET/OU D'EXÉCUTION D'UN TEST DE FUITE DANS UN AGENCEMENT DE FILTRE

(30) Priorität: 26.11.2008 DE 102008044080
(43) Veröffentlichungstag der Anmeldung: 02.06.2010
(73) Patentinhaber: Caverion Deutschland GmbH, 80992 München (DE)
(72) Erfinder: Felser, Hans, 52080, Aachen (DE); Martinsteg, Dipl.-Ing., Hans, 52159, Roetgen (DE)
(74) Vertreter: Bauer, Dirk

(56) Entgegenhaltungen:
- EP-A2- 0 099 129
- EP-A2- 2 090 350
- US-A- 4 515 007
- US-A1- 2006 042 359
- US-A1- 2006 053 864

## Beschreibung

### Einleitung

Die vorliegende Erfindung betrifft ein Verfahren zur Bestimmung des Abscheidegrades und/oder zur Durchführung eines Lecktests bei einer Filteranordnung zur Abscheidung von Stäuben und Aerosolen aus einem Gasvolumenstrom, wobei ein Testaerosol mittels einer Aufgabeeinrichtung in Strömungsrichtung betrachtet vor einem Filterelement in einen Rohgasstrom aufgegeben wird und eine Messung einer Partikelanzahl oder eine Bestimmung einer Partikelkonzentration in Strömungsrichtung betrachtet hinter dem Filterelement in einem Reingasstrom durchgeführt wird, wobei die Aerosolaufgabe mittels einer Verteileinrichtung der Aufgabeeinrichtung erfolgt und aus der Verteileinrichtung mehrere Testaerosol enthaltende Teilvolumenströme in den Rohgasstrom abgegeben werden, wobei die Teilvolumenströme an einer Stelle in den Rohgasstrom abgegeben werden, an der ein Strömungsquerschnitt des Rohgasstroms um maximal 20 %, vorzugsweise um maximal 10 % von einem Eintrittsquerschnitt des Filterelementes der Filteranordnung abweicht, wobei die Teilvolumenströme mittels mindestens einer Lanze gleichmäßig verteilt über dem Strömungsquerschnitt abgegeben werden. Ferner hat die Erfindung eine Vorrichtung zum Gegenstand, mit der das vorgenannte Verfahren durchgeführt werden kann.

Die Filteranordnung umfasst gemäß der vorliegenden Erfindung ein Gehäuse mit rohgasseitigem und reingasseitigem Anschlussstutzen und einem in dem Gehäuse angeordneten Filterelement, das typischerweise in einem Dichtrahmen sitzt, wobei dieser eine dem freien Querschnitt des Filterelementes entsprechende Durchlassöffnung besitzt.

### Stand der Technik

Verfahren und Vorrichtungen zur Bestimmung des Abscheidegrades oder zur Durchführung eines Lecktests sind bereits zahlreich aus dem Stand der Technik bekannt.

Beispielsweise offenbart die ältere Anmeldung DE 10 2008 008 804 ein entsprechendes Verfahren sowie eine Vorrichtung, bei der die Aufgabe des Testaerosols im Rohgasraum mittels eines Aufgabeelementes erfolgt, das über eine entsprechende Verfahreinrichtung über die Höhe des Filtergehäuses verfahrbar ist. Auf der in Strömungsrichtung hinter dem Filterelement befindlichen Reingasseite ist ein ebenfalls über die Höhe des Filterelements verfahrbares Aufnahmeelement angeordnet, so dass mittels der bekannten Vorrichtung immer ein streifenförmiger Teilquerschnitt ("Teststreifen") des Filters überprüft werden kann. Das in der DE 10 2008 008 804 beschriebene Verfahren sowie die zugehörige Vorrichtung sollen insbesondere bei Filteranordnungen zur Anwendung kommen, die aufgrund beengter Verhältnisse nur über einen geringen Raum auf der Rohgasseite verfügen, so dass eine gleichmäßige Verteilung des Testaerosols über den gesamten Querschnitt des Rohgasstroms andernfalls nahezu unmöglich ist, beziehungsweise bei Filtergehäusen zur Aufnahme mehrerer parallel geschalteter Filterelemente. Ein Nachteil dieser Verfahrensweise besteht darin, dass die Verfahreinrichtungen auf der Roh- und Reinraumseite verhältnismäßig kosten- sowie wartungsintensiv sind, insbesondere deren bewegliche Teile.

Aus der WO 2007/021333 A2 ist eine in einem Filtergehäuse untergebrachte Filteranordnung bekannt, bei der eine ringförmige Aufgabeeinrichtung für das Testaerosol innerhalb eines Anschlussstutzens angeordnet ist. In dem Bereich, in dem der Querschnitt des Anschlussstutzens in den Querschnitt des Filtergehäuses übergeht, befindet sich eine Verteileinrichtung für das Testaerosol, die für eine Verwirbelung des Rohgasstroms im Rohgasraum sorgt. Hieraus ergeben sich Probleme im Hinblick auf die Gleichmäßigkeit der Verteilung des Testaerosols, so dass keine hinreichend zuverlässigen Angaben über die Konzentration desselben sowie über den Abscheidegrad des Filterelementes möglich sind.

Die US 4,055,075 A betrifft eine Filtervorrichtung mit einem Gehäuse, in dem mehrere HEPA-Filter nebeneinander sowie in Reihe geschaltet sind. Zur Durchführung eines Lecktests weist die Filtervorrichtung vor jedem Filterelement eine Aufgabeeinrichtung zur Aufgabe eines Testaerosols auf, wobei ein Verteilkanal der Aufgabeeinrichtung über die gesamte Breite des jeweiligen Filterelements verläuft. In der Mitte von jedem Filterelement ist eine Verteileinrichtung in Form einer Lanze angeordnet, die in Strömungsrichtung verläuft und eine Vielzahl von über ihren Umfang verteilten Öffnungen aufweist. Zur Erreichung verschiedener Aufgabemuster des Testaerosols, wird die Richtung, mit der die Partikel aus den Öffnungen ausströmen, mittels einer eine elektrische Strahlung abgebenden Vorrichtung, verändert. Auch mit dieser Aufgabeeinrichtung ist eine möglichst homogene Verteilung des Testaerosols schwer zu erreichen.

### Aufgabe

Unter Berücksichtigung des vorstehend beschriebenen Standes der Technik liegt der Erfindung die Aufgabe zugrunde, ein Verfahren und eine Vorrichtung zur Bestimmung des Abscheidegrads oder zur Durchführung eines Lecktests bei einer Filteranordnung zur Abscheidung von Stäuben und Aerosolen aus einem Gasvolumenstrom vorzuschlagen, das beziehungsweise die sich durch eine hohe Kosteneffizienz auszeichnen. Ferner sollen genaue Aussagen über den Abscheidegrad der getesteten Filterelemente möglich sein.

### Lösung

Diese Aufgabe wird durch ein Verfahren gemäss Anspruch 1, bzw durch eine vorrichtung gemäss Anspruch 6 gelöst.

Verfahrensmäßig wird diese Aufgabe dadurch gelöst, dass die Längsrichtung der mindestens einen Lanze sich senkrecht zu der Strömungsrichtung des Rohgasstroms erstreckt.

Erfindungsgemäß wird das Testaerosol im gesamten Bereich vor dem Eintrittsquerschnitt gleichzeitig aufgegeben, so dass eine Messung zur Bestimmung des Abscheidegrads eines Filterelementes oder ein Lecktest desselben durch das In-Verhältnis-Setzen zwischen Roh- und Reingasmessung ermittelt werden kann. Die Messung der Aerosolkonzentration auf der Rohgasseite kann gemäß DIN EN 1822-4 über mindestens neun gleichmäßig über den Strömungsquerschnitt verteilte Messstellen beziehungsweise Entnahmesonden erfolgen.

Eine online Messung auf der Rohgasseite birgt die Gefahr von Kontaminationen. Unter nachweislich reproduzierbaren Bedingungen in der Erzeugung bestimmter Anzahlen von Testaerosolpartikeln und deren homogener Verteilung kann während des regulären Betriebes von Filtereinrichtungen auf die Rohgasmessung verzichtet werden.

Ein Messzyklus setzt sich aus vorbeschriebenen "Teststreifen" auf der Reingasseite zusammen, die entsprechend der Ermittlung des Abscheidegrades beziehungsweise eines Lecks mit den entsprechenden Rohgasmessungen in Relation gesetzt werden. Bei einer ausreichend qualifizierten Testaerosolaufgabe und -verteilung reicht der einmalig ermittelte Referenzwert der Rohgaskonzentration, der mit den einzelnen "Teststreifen" der Reinluftmessung in Relation gesetzt wird.

Erfolgt die Aufgabe des Testaerosols in den Rohgasstrom an einer Stelle, an der gleichmäßige Strömungsverhältnisse vorherrschen und an der der Strömungsquerschnitt des Rohgasstroms ungefähr so groß ist wie der Eintrittsquerschnitt des Filterelementes, ergibt sich der Vorteil, dass das Testaerosol in einen sich gleichmäßig bewegenden Volumenstrom im wesentlichen ohne die Verteilung des Testaerosols beeinflussende Turbulenzen eingebracht wird. Ferner wird der gleichmäßig strömende Volumenstrom durch die Einbringung des Testaerosols selbst bei mehreren über den Strömungsquerschnitt des Rohgasstroms gleichmäßig verteilte Teilvolumenströme strömungstechnisch kaum gestört, sodass selbst nach Aufgabe des Testaerosols eine gleichmäßige, Strömung ohne größere Turbulenzen entsteht. Unter "ungefähr" gleicher Querschnitt sollen im Rahmen dieser Anmeldung auch mögliche Abweichungen von ca. 20 % verstanden werden.

Darüber hinaus ergibt sich bei dem erfindungsgemäßen Verfahren eine gleichmäßige Verteilung des Testaerosols in dem Rohgasstrom, wodurch die Auswertung der Messung erheblich vereinfacht und das Ergebnis derselben zuverlässiger wird. Insbesondere dadurch, dass das Testaerosol mit Hilfe einer Lanze aufgegeben wird, die sich senkrecht zu der Strömungsrichtung des Rohgasstroms erstreckt, werden die Teilvolumenströme zum einen gleichmäßig über die Höhe des Strömungsquerschnitts abgegeben und zum anderen direkt in Richtung des Rohgasstroms aufgegeben, wodurch Turbulenzen bei der Testaerosolaufgabe vermieden werden.

Unter vorgenannten Bedingungen ist es gemäß der Erfindung nicht erforderlich, den mit dem Testaerosol angereicherten Rohgasstrom auf seinem Weg von dem Aufgabeort bis hin zum Eintritt in die Filteranordnung mittels gesonderter Maßnahmen zu homogenisieren. Störungen der Strömungsverhältnisse durch Querschnittsveränderungen, Einbauten und so weiter können zum Beispiel durch Einbau eines beziehungsweise mehrerer Strömungsgleichrichter, zum Beispiel in Form von Lochblechen, in Strömungsrichtung vor und/oder hinter der Aerosolaufgabe kompensiert werden.

Zur Beibehaltung einer möglichst gleichmäßigen Strömung auf der gesamten Rohgasseite ist es vorteilhafterweise vorgesehen, dass sich der Strömungsquerschnitt von der Aufgabe bis zum Eintritt in das Filterelement im wesentlichen nicht ändert. Dies betrifft sowohl die Querschnittsform als auch die Querschnittsfläche.

Nach einer Ausgestaltung der Erfindung wird die gleiche Verteilung der mit Testaerosol beaufschlagten Teilvolumenströme dadurch erreicht, dass im Falle mehrerer Lanzen die Lanzen parallel und im Abstand zueinander verlaufen, wobei die Teilvolumenströme aus der mindestens einen Lanze aus einer Mehrzahl von äquidistant über eine Länge der Lanze verteilt angeordnete Gruppen von Austrittsöffnungen austreten. Die Gruppen können dieselbe Anzahl von Austrittsöffnungen aufweisen oder abwechselnd unterschiedliche Anzahlen und Anordnungen der einzelnen Austrittsöffnungen aufweisen.

Um gewährleisten zu können, dass die verschiedenen Teilvolumenströme möglichst gleiche Eigenschaften hinsichtlich ihrer Testaerosolkonzentration und ihrer Strömungsgeschwindigkeit besitzen, kann vorteilhafterweise vorgesehen werden, dass die den einzelnen Lanzen zugeführten, Testaerosol enthaltenden Volumenströme aus einem Verteilkanal in die einzelnen Lanzen abgegeben werden, wobei ein in den Verteilkanal einströmender Volumenstrom vor seiner Verteilung auf die einzelnen Lanzen durch einen Strömungsgleichrichter geführt wird, wodurch ein die Vergleichmäßigung der Teilvolumenströme begünstigender Druckverlust erzeugt wird.

Gemäß einer Weiterbildung der Erfindung ist vorgesehen, dass der Reingasstrom mittels einer zweiten Verteileinrichtung mit einem Testaerosol beaufschlagt wird und der so erzeugte Rohgasstrom einem zweiten nachgeschalteten Filterelement der Filteranordnung zugeführt wird. Dieses Verfahren ist insbesondere für Filteranordnungen vorgesehen, in denen zwei Filterelemente in Reihenschaltung hintereinander geschaltet sind.

Vorrichtungsgemäß wird die eingangs gestellte Aufgabe durch eine Vorrichtung gemäß dem Oberbegriff des Anspruchs 6 gelöst, bei der die Lanzen sich senkrecht zu der Strömungsrichtung des Rohgasstroms erstrecken, parallel zueinander verlaufen und jeweils äquidistant zueinander angeordnet sind. Mit Hilfe dieser Vorrichtung kann das erfindungsgemäße Verfahren auf einfache Weise durchgeführt werden. Nach Inbetriebnahme der Filteranordnung und nach Erbringung des Nachweises einer reproduzierbaren homogenen Aerosolverteilung sowie Aerosolkonzentration vor dem Filterelement bietet die erfindungsgemäße Aerosolaufgabe und deren homogene Verteilung die Möglichkeit auf weitere Rohgaskonzentrationsbestimmungen zu verzichten und damit das Risiko von Kontaminationen durch den mit Schadstoffen belasteten Rohgasstrom zu minimieren.

Liegen gleichmäßige Strömungsverhältnisse vor und ist der Strömungsquerschnitt von der Aufgabe bis zum Eintritt in das Filterelement konstant, so ist eine gleichmäßige Beaufschlagung des gesamten Querschnitts des Filterelements sichergestellt.

Es ist besonders von Vorteil, wenn die Lanzen an einen außerhalb des Strömungsquerschnitts befindlichen Verteilkanal angeschlossen sind, der einen vor einer ersten Abzweigung einer Lanze angeordneten Strömungsgleichrichter aufweist. Somit ist gewährleistet, dass die einzelnen Teilvolumenströme annähernd gleich groß sind sowie eine gleiche Strömungsgeschwindigkeit aufweisen.

Schließlich sieht eine Weiterentwicklung der erfindungsgemäßen Vorrichtung eine zweite Verteileinrichtung zur Beaufschlagung des Reingasstroms mit einem Testaerosol vor, die vor einem zweiten, dem ersten Filterelement nachgeschalteten Filterelement der Filteranordnung angeordnet ist. Mittels dieser Vorrichtung können zwei in Reihe geschaltete Filterelemente unabhängig voneinander getestet werden. Selbstverständlich ist es ebenfalls denkbar, mehr als zwei Filterelemente einer Filteranordnung hintereinander zu schalten, wobei jedes Filterelement jeweils mit einer vorgeschalteten Verteileinrichtung ausgestattet ist.

### Ausführungsbeispiel

Die Erfindung wird nachfolgend anhand von Ausführungsbeispielen erfindungsgemäßer Vorrichtungen, die in den Figuren schematisch dargestellt sind, näher erläutert.

Es zeigt
- Fig. 1:: einen Vertikalschnitt durch eine erfindungsgemäße Vorrichtung in einer ersten Ausführungsform,
- Fig. 2:: einen Vertikalschnitt durch eine erfindungsgemäße Vorrichtung in einer zweiten Ausführungsform,
- Fig. 3:: eine Ansicht der erfindungsgemäßen Verteileinrichtung,
- Fig. 4:: ein Schnitt durch eine Lanze der Verteileinrichtung und
- Fig. 5:: ein Schnitt durch eine Lanze der Rohluftprobennahme.

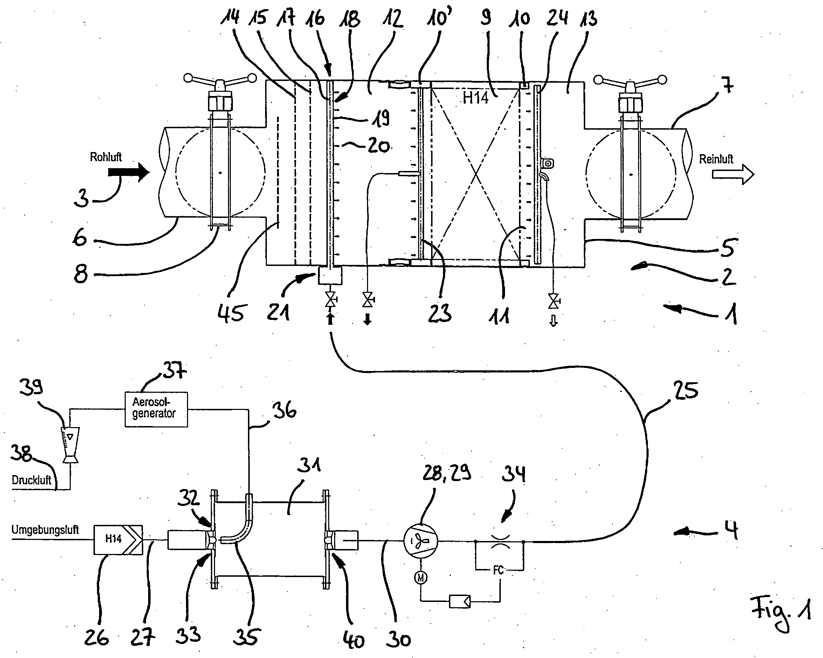

In der Figur 1 ist ein Vertikalschnitt durch eine erste erfindungsgemäße Vorrichtung 1 zur Bestimmung des Abscheidegrades sowie zur Durchführung eines Lecktests bei einer Filteranordnung 2 zur Abscheidung von Aerosolen aus einem in Richtung des Pfeils 3 einströmenden Gasvolumenstrom dargestellt. Ferner geht aus der Figur 1 eine schematische Darstellung für eine Vorrichtung 4 zur Herstellung und Vorkonditionierung des Testaerosols hervor.

Die Vorrichtung 1 umfasst eine Filteranordnung 2, die ein im wesentlichen quaderförmiges Filtergehäuse 5 mit einem rohgasseitigen Anschlussstutzen 6 und einem reingasseitigen Anschlussstutzen 7 besitzt. Sowohl im rohgasseitigen als auch im reingasseitigen Anschlussstutzen 6, 7 befindet sich jeweils eine Absperrklappe 8.

Im Inneren des Filtergehäuses 5 befindet sich ein Filterelement 9 in Form einer quaderförmigen HEPA- Filterzelle. Das Filterelement 9 ist unter Zwischenschaltung bekannter Dichtungen mit Hilfe eines Anpressrahmens 10' gegen Randstreifen eines Dichtrahmens 10 gepresst, der eine dem freien Querschnitt des Filterelementes 9 entsprechende Durchlassöffnung 11 besitzt. Das Filterelement 9 und der Dichtrahmen 10, der umlaufend dicht an das Filtergehäuse 5 angeschlossen ist, unterteilen das Filtergehäuse in einen Rohgasraum 12 und einen Reingasraum 13. Ein in Richtung des Pfeils 3 einströmender Gasvolumenstrom, aus dem mitgeführte Stäube und Aerosole abgeschieden werden sollen, kann somit nur über das Filtermedium des Filterelementes 9 von dem Rohgasraum 12 in den Reingasraum 13 und somit aus dem reingasseitigen Anschlussstutzen 7 hinaus gelangen.

Aufgrund einer sprunghaften Querschnittsvergrößerung zwischen dem rohgasseitigen Anschlussstutzen 6 und dem Filtergehäuse 5 erfährt der einströmende Gasvolumenstrom bei Eintritt in das Filtergehäuse 5 eine gewisse Verwirbelung, weshalb nah an dem rohgasseitigen Anschlussstutzen 6 zwei hintereinandergeschaltete Gleichrichter 14, 15 in dem Filtergehäuse 5 angeordnet sind, wobei deren Abmessungen bezüglich Höhe und Tiefe den Abmessungen des Querschnitts des Filtergehäuses 5 entsprechen. Bei Erfordernis wäre zur besseren Vergleichmäßigung der Strömung der Einbau eines dritten Gleichrichters 45 (zum Beispiel Prallplatte) möglich.

In Strömungsrichtung (Pfeil 3) betrachtet hinter den beiden Gleichrichtern 14, 15, wo sich der Gasvolumenstrom durch eine gleichmäßige Strömung auszeichnet, ist eine Aufgabeeinrichtung 16 zur Aufgabe eines Testaerosols angeordnet. Die Aufgabeeinrichtung 16 umfasst eine Verteileinrichtung 17, die eine Mehrzahl von sich über die Höhe des Filtergehäuses 5 erstreckenden Lanzen 18 aufweist, die wiederum jeweils mit einer Mehrzahl von Austrittsöffnungen 19 versehen sind, aus denen jeweils ein als Pfeil 20 dargestellter Teilvolumenstrom des Testaerosols austritt. Die Teilvolumenströme werden demnach in Richtung des Gasvolumenstroms in denselben eingebracht.

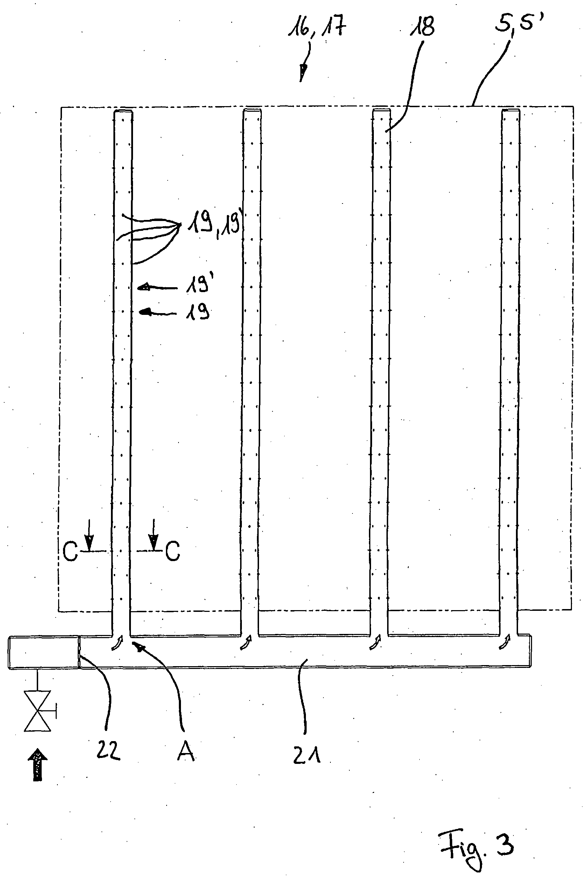

Die Lanzen 18 sind jeweils an einen sich außerhalb des Filtergehäuses 5 befindlichen Verteilkanal 21 angeschlossen, in dem ein Strömungsgleichrichter 22 angeordnet ist, der in der Figur 3 zu erkennen ist.

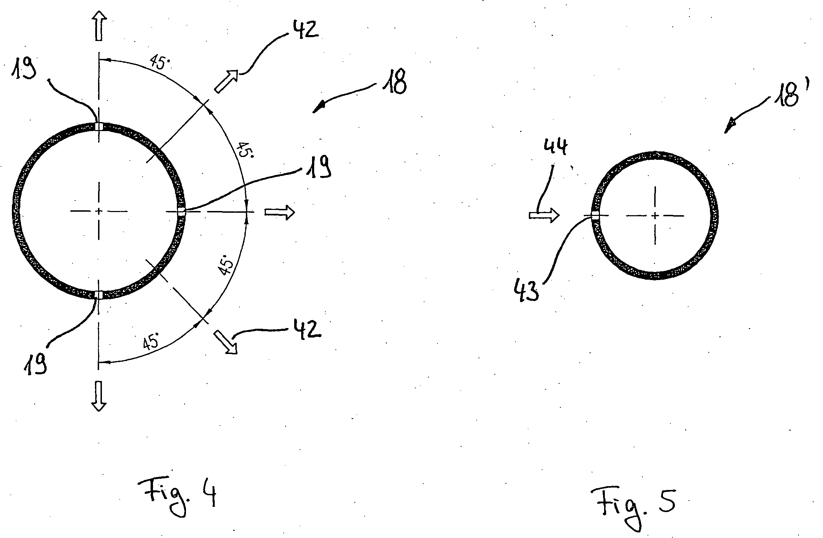

Um die Konzentration des Testaerosols im Rohgasraum 12 ermitteln zu können, ist unmittelbar vor dem Filterelement 9 eine Rohluftprobenahme 23 vorgesehen, die ebenfalls aus einer Mehrzahl von sich über die Höhe des Filtergehäuses erstreckenden Lanzen 18' besteht, auf die in der Figur 5 weiter eingegangen wird.

Zur Bestimmung des Abscheidegrades ist im Reingasraum 13 unmittelbar hinter dem Filterelement 9 ein Aufnahmeelement 24 vorgesehen, mittels dem zwecks Überprüfung der Partikelkonzentration ein Teilstrom des Reingasstroms entnommen wird. Dieser wird in bekannter Weise einem optischen Partikelzähler zugeführt.

Die Vorrichtung 4 dient der Herstellung und Vorkonditionierung des Testaerosols, das mittels einer Leitung 25 dem Verteilkanal 21 zugeführt wird. Die Vorrichtung umfasst eine als Verdichter 28 ausgebildete Luftfördereinrichtung 29, mittels der Umgebungsluft über eine Leitung 30 angesaugt wird. Die Umgebungsluft wird zwecks Reinigung zunächst über ein HEPA- Filter 26 geleitet und gelangt dann über eine Leitung 27 in eine Mischkammer 31, wobei sich im Bereich einer Eintrittsöffnung 32 der Mischkammer 31 eine Dralleinrichtung 33 befindet, mittels der der aus der Umgebungsluft gebildete Luftvolumenstrom verwirbelt wird. Eine zwischen dem Verdichter 28 und der Leitung 25 angeordnete Einrichtung 34 dient zur Volumenstrommessung und -regelung.

Unmittelbar hinter der Dralleinrichtung 33 ist innerhalb der Mischkammer 31 ein Austrittsrohr 35 zur Einleitung eines ersten Mischvolumenstroms vorgesehen, wobei der erste Mischvolumenstrom in die zu der Strömungsrichtung des aus Umgebungsluft gebildeten Luftvolumenstroms entgegengesetzte Richtung eingebracht wird. Die von der Dralleinrichtung 33 verwirbelte Umgebungsluft wird somit gleichmäßig mit dem ersten Mischvolumenstrom beaufschlagt und es entsteht ein weiter verdünnter zweiter Mischvolumenstrom in der Mischkammer 31. Durch die Anordnung des Verdichters 28 hinter der Mischkammer 31 herrschen keine großen Drücke in dieser und eine Einbringung des ersten Mischvolumenstroms in die Mischkammer 31 ist problemlos möglich.

Der über eine Leitung 36 in die Mischkammer 33 eingebrachte erste Mischvolumenstrom wird mittels eines Aerosolgenerators 37 erzeugt. Eine mit Druckluft gespeiste Leitung 38 führt über einen Schwebekörperdurchflussmesser 39 zu dem Aerosolgenerator 37, in dem aus der Druckluft und einem Vorrat des Testaerosols der erste Mischvolumenstrom gebildet wird.

In der Mischkammer 31 erfolgt eine weitere Verdünnung des in dem ersten Mischvolumenstrom befindlichen Aerosols, das die Mischkammer 31 über eine weitere Dralleinrichtung 40 als zweiter Mischvolumenstrom verlässt und über die vorerwähnte Leitung 25 dem Verteilkanal 21 und anschließend dem Rohgasstrom zugeführt wird. Der zweite Mischvolumenstrom beträgt etwa 60 m³/h und setzt sich aus etwa 2 m³/h des ersten Mischvolumenstroms und 58 m³/h des aus der Umgebungsluft gebildeten Luftvolumenstroms zusammen.

Um eine ausreichende Zerstäubung des Aerosols zu gewährleisten wird dem Aerosolgenerator 37 Druckluft von 2 bar zugeführt. Die Umgebungsluft wird der Mischkammer 31 bei einem Unterdruck von 140 Pa zugeführt. Mit Verschmutzen des HEPA-Filters 26 steigt der Unterdruck in der Mischkammer 31, da der Volumenstrom mittels des Reglers konstant gehalten wird.

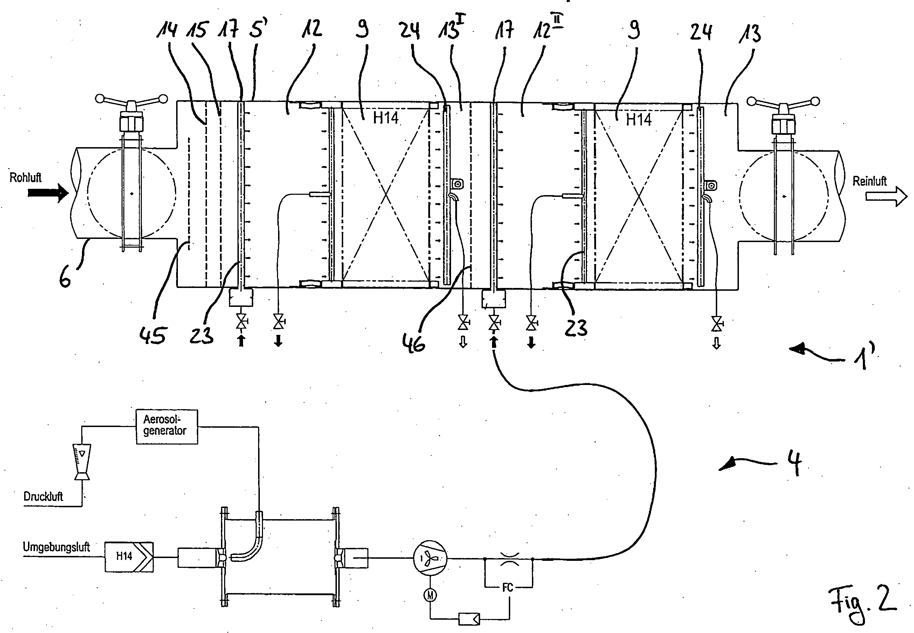

Die Figur 2 zeigt einen Vertikalschnitt durch eine erfindungsgemäße Vorrichtung 1' in einer zweiten Ausführungsform, deren Verteileinrichtung 17 mit derselben Vorrichtung 4 zur Herstellung des Testaerosols gespeist wird.

Im Unterschied zu der Vorrichtung 1 aus Figur 1 verfügt die in Figur 2 gezeigte Vorrichtung 1' über ein Filtergehäuse 5', in dem zwei in Reihe geschaltete Filterelemente 9 angeordnet sind. Um die beiden Filterelemente 9 separat voneinander überprüfen zu können, ist vor jedem Filterelement 9 eine Verteileinrichtung 17 zur Aufgabe des Testaerosols nach oben beschriebener Art sowie eine Rohluftprobenahme 23 vorgesehen. In Strömungsrichtung betrachtet befindet sich hinter jedem Filterelement 9 ein Aufnahmeelement 24 zur Überprüfung der Partikelkonzentration des gefilterten Gasvolumenstroms.

Während der in Strömungsrichtung vor dem ersten Filterelement 9 befindliche Bereich den Rohgasraum 12 und der in Strömungsrichtung hinter dem zweiten Filterelement 9 befindliche Bereich den Reingasraum 13 der Filteranordnung 2' bildet, stellt der zwischen den Filterelementen 9 befindliche Bereich den Reingasraum 13^{I} des ersten Filterelementes 9 und gleichzeitig den Rohgasraum 12^{II} des zweiten Filterelementes 9 dar. Im Rohgasraum 12 sind im Bereich des Anschlussstutzens 6 abermals zwei hintereinander geschaltete Gleichrichter 14, 15 angeordnet. Darüber hinaus ist ein dritter Gleichrichter 45 direkt am Eintritt in das Filtergehäuse 5' sowie ein weiterer Gleichrichter 46 vor der Verteileinrichtung 17 des zweiten Filterelements 9 angeordnet.

In der Figur 3 ist eine Ansicht der erfindungsgemäßen Aufgabeeinrichtung 16 aus den Figuren 1 und 2 dargestellt, deren Verteileinrichtung 17 mit vier Lanzen 18 ausgestattet ist. Während sich die Lanzen 18 innerhalb des Filtergehäuses 5, 5' befinden und sich über annähernd die gesamte Höhe des Filtergehäuses 5, 5' erstrecken, befindet sich der die Lanzen 18 mit Testaerosol versorgenden gemeinsamer Verteilkanal 21 außerhalb des Filtergehäuses 5, 5'. Die Lanzen 18 sind jeweils mit Austrittsöffnungen 19 versehen, die gleichmäßig über den Querschnitt des Filtergehäuses 5, 5' verteilt sind, so dass die Teilvolumenströme über den Querschnitt gleichmäßig verteilt eingebracht werden.

Insbesondere ist aus der Figur 3 erkennbar, dass jeweils auf einer bestimmten Höhe der Lanzen 18 Gruppen von Austrittsöffnungen 19, 19' angeordnet sind, die sich über den Umfang der Lanze 18 verteilen. Dabei befinden sich abwechselnd drei Austrittsöffnungen 19 und zwei Austrittsöffnungen 19' auf einer Höhe. Zwar besitzen die vier Lanzen 18 jeweils das selbe Muster an Austrittsöffnungen 19, 19', jedoch sind benachbarte Lanzen 18 in ihrer Längsrichtung derart versetzt, dass sich die drei Austrittsöffnungen 19 einer Lanze 18 neben den zwei Austrittsöffnungen 19' der benachbarten Lanze 18 befinden. Die Austrittsöffnungen 19, 19' weisen einen Durchmesser von etwa 1,5 mm auf.

Im Anfangsbereich des Verteilkanals 21, nämlich vor einer ersten Abzweigung A einer Lanze 18, ist der aus einem Lochblech bestehende Strömungsgleichrichter 22 angeordnet, der zusätzlich für eine annähernd gleiche Volumenstrombeaufschlagung des Testaerosols in den einzelnen Lanzen 18 sorgt.

Die Figur 4 zeigt den Querschnitt einer Lanze 18, aus dem besser deutlich wird, dass die Lanze 18 nicht nur über ihre Höhe mit unterschiedlich angeordneten Austrittsöffnungen 19, 19' versehen ist, sondern dass sich diese ebenfalls über Ihren Umfang verteilen. Auf bestimmten Höhen besitzt die Lanze 18 nämlich entweder zwei oder drei Austrittsöffnungen 19, 19'. Im Fall, dass auf einer bestimmten Höhe drei Austrittsöffnungen 19 angeordnet sind, ist eine genau zu der Strömungsrichtung des Gasvolumenstroms ausgerichtet und die übrigen zwei Austrittsöffnungen 19 jeweils senkrecht zu der Strömungsrichtung ausgerichtet, also jeweils 90° zu der mittleren Austrittsöffnung 19 versetzt. Jeweils oberhalb und unterhalb einer Ebene der Lanze 18 mit drei Austrittsöffnung 19 befindet sich eine Ebene, in der die Lanze 18 mit lediglich zwei Austrittsöffnungen 19' versehen ist, wobei diese um 45° von der Strömungsrichtung versetzt sind. Auf diese Weise ist eine äußerst gleichmäßige Verteilung des Aerosols im Rohgasraum 12 möglich.

Schließlich zeigt die Figur 5 einen Schnitt durch eine Lanze 18' der Rohluftprobennahme 23. Diese weist über ihre Höhe verteilt einzelne Schlitze 43 auf, die jeweils entgegen die durch den Pfeil 44 Strömungsrichtung des Gasvolumenstroms zeigen, so dass sie optimal für ihren Zweck, der Entnahme von Rohluft, ausgerichtet sind. Die Schlitze 43 weisen eine Breite von etwa 1,0 mm und eine Länge von etwa 10,0 mm auf.

### Bezugszeichenliste:

- 1, 1': Vorrichtung
- 2: Filteranordnung
- 3: Pfeil
- 4: Vorrichtung
- 5, 5': Filtergehäuse
- 6: Rohgasseitiger Anschlussstutzen
- 7: Reingasseitiger Anschlussstutzen
- 8: Absperrklappe
- 9: Filterelement
- 10: Dichtrahmen
- 10': Anpressrahmen
- 11: Durchlassöffnung
- 12, 12^{II}: Rohgasraum
- 13, 13^{I}: Reingasraum
- 14: Gleichrichter
- 15: Gleichrichter
- 16: Aufgabeeinrichtung
- 17: Verteileinrichtung
- 18, 18': Lanze
- 19, 19': Austrittsöffnung
- 20: Pfeil
- 21: Verteilkanal
- 22: Strömungsgleichrichter
- 23: Rohluftprobenahme
- 24: Aufnahmeelement
- 25: Leitung
- 26: HEPA- Filter
- 27: Leitung
- 28: Verdichter
- 29: Luftfördereinrichtung
- 30: Leitung
- 31: Mischkammer
- 32: Eintrittsöffnung
- 33: Dralleinrichtung
- 34: Einrichtung
- 35: Austrittsrohr
- 36: Leitung
- 37: Aerosolgenerator
- 38: Leitung
- 39: Schwebekörperdurchflussmesser
- 40: Dralleinrichtung
- 42: Pfeil
- 43: Schlitze
- 44: Pfeil
- 45: dritter Gleichrichter
- 46: Gleichrichter
- A: Abzweigung

## Patentansprüche

1. Verfahren zur Bestimmung des Abscheidegrades und/oder zur Durchführung eines Lecktests bei einer Filteranordnung (2) zur Abscheidung von Stäuben und Aerosolen aus einem Gasvolumenstrom, wobei ein Testaerosol mittels einer Aufgabeeinrichtung (16) in Strömungsrichtung betrachtet vor einem Filterelement (9) in einen Rohgasstrom aufgegeben wird und eine Messung einer Partikelanzahl oder eine Bestimmung einer Partikelkonzentration in Strömungsrichtung betrachtet hinter dem Filterelement (9) in einem Reingasstrom durchgeführt wird, wobei die Aerosolaufgabe mittels einer Verteileinrichtung (17) der Aufgabeeinrichtung (16) erfolgt und aus der Verteileinrichtung (17) mehrere Testaerosol enthaltende Teilvolumenströme in den Rohgasstrom abgegeben werden, wobei die Teilvolumenströme mittels mindestens einer Lanze (18) gleichmäßig verteilt über dem Strömungsquerschnitt abgegeben werden und die Längsrichtung der mindestens einen Lanze (18) sich senkrecht zu der Strömungsrichtung des Rohgasstroms erstreckt, **dadurch gekennzeichnet, dass** die Teilvolumenströme an einer Stelle in den Rohgasstrom abgegeben werden, an der ein Strömungsquerschnitt des Rohgasstroms um maximal 20 %, vorzugsweise um maximal 10 % von einem Eintrittsquerschnitt des Filterelementes (9) der Filteranordnung (2) abweicht.

2. Verfahren nach Anspruch 1, **dadurch gekennzeichnet, dass** sich der Strömungsquerschnitt von der Aufgabe bis zum Eintritt in das Filterelement (9) im wesentlichen nicht ändert.

3. Verfahren nach Anspruch 1 oder 2, **dadurch gekennzeichnet, dass** im Falle mehrerer Lanzen (18) die Lanzen (18) parallel und im Abstand zueinander verlaufen, wobei die Teilvolumenströme aus der mindestens einen Lanze (18) aus einer Mehrzahl von äquidistan über eine Länge der Lanze (18) verteilt angeordnete Austrittsöffnungen (19) austreten.

4. Verfahren nach Anspruch 3, **dadurch gekennzeichnet, dass** die den einzelnen Lanzen (18) zugeführten, Testaerosol enthaltenden Volumenströmen aus einem Verteilkanal (21) in die einzelnen Lanzen (18) abgegeben werden, wobei ein in den Verteilkanal (21) einströmender Volumenstrom vor seiner Verteilung auf die einzelnen Lanzen (18) durch einen Strömungsgleichrichter (22) geführt wird.

5. Verfahren nach einem der Ansprüche 1 bis 4, **dadurch gekennzeichnet, dass** der Reingasstrom mittels einer zweiten Verteileinrichtung (17) mit einem Testaerosol beaufschlagt wird und der so erzeugte Rohgasstrom einem zweiten nachgeschalteten Filterelement (9) der Filteranordnung (2) zugeführt wird

6. Vorrichtung (1, 1') zur Bestimmung des Abscheidegrades oder zur Durchführung eines Lecktests bei einer Filteranordnung (2) zur Abscheidung von Aerosolen aus einem Gasvolumenstrom, mit einer Aufgabeeinrichtung (16), mit der in Strömungseinrichtung des Gasvolumenstroms betrachtet vor einem Filterelement (9) ein Testaerosol in einen Rohgasstrom aufgebbar ist, und mit einem Aufnahmeelement (24), mit dem in Strömungsrichtung des Gasvolumenstroms betrachtet hinter dem Filterelement (9) ein Teilvolumenstrom aus dem Reingasstrom entnehmbar ist, wobei in dem entnommenen Teilvolumenstrom eine Partikelanzahl messbar oder eine Partikelkonzentration des Testaerosols bestimmbar ist, und mit einer Verteileinrichtung (17), mit der mehrere Testaerosol enthaltende Teilvolumenströme in den Rohgasstrom abgebbar sind, wobei die Verteileinrichtung (17) mindestens eine Lanze (18) aufweist, die jeweils mit einer Mehrzahl von in deren Längsrichtung verteilt angeordneten Austrittsöffnungen (19) für jeweils einen Teilvolumenstrom versehen ist und die Lanzen (18) sich senkrecht zu der Strömungsrichtung des Rohgasstroms erstrecken, parallel zueinander verlaufen und jeweils äquidistant zueinander angeordnet sind, **dadurch gekennzeichnet, dass** der Strömungsquerschnitt des Rohgasstroms im Bereich der mindestens einen Lanze (18) um maximal 20 %, vorzugsweise um maximal 10 % von dem Eintrittsquerschnitt eines Filterelements (9) der Filteranordnung (2) abweicht.

7. Vorrichtung nach Anspruch 6, **dadurch gekennzeichnet, dass** der Strömungsquerschnitt von der Aufgabe bis zum Eintritt in das Filterelement (9) konstant ist.

8. Vorrichtung nach einem der Ansprüche 6 und 7, **dadurch gekennzeichnet, dass** die Lanzen (18) an einen außerhalb des Strömungsquerschnitts befindlichen Verteilkanal (21) angeschlossen sind, der einen vor einer ersten Abzweigung (A) einer Lanze (18) angeordneten Strömungsgleichrichter (22) aufweist.

9. Vorrichtung nach einem der Ansprüche 6 bis 8, **gekennzeichnet durch** eine zweite Verteileinrichtung (17) zur Beaufschlagung des Reingasstroms mit einem Testaerosol, die vor einem zweiten, dem ersten Filterelement (9) nachgeschalteten Filterelement (9) der Filteranordnung (2) angeordnet ist.

## Claims

1. A method for determining the filtration efficiency and/or performing a leak test in a filtering device (2) for filtering dusts and aerosols out of a gas volume flow, wherein a test aerosol is supplied by means of a feeding device (16) into a raw gas flow in front of a filter element (9) as viewed in the direction of flow, and a particle number is measured or a particle concentration is determined in a clean gas flow in back of the filter element (9) as viewed in the direction of flow, wherein the aerosol supply takes place by means of a distribution device (17) of the feeding device (16), and several partial volume flows containing test aerosol are fed into the raw gas flow from the distribution device (17), wherein the partial volume flows are supplied uniformly distributed over the flow cross section via at least one lance (18), and the longitudinal direction of the at least one lance (18) extends perpendicular to the direction of flow of the raw gas flow, **characterized in that** the partial volume flows are fed into the raw gas flow at a point where a flow cross section of the raw gas flow deviates from an inlet cross section of the filter element (9) of the filtering device (2) by at most 20 %, preferably by at most 10 %.

2. The method according to claim 1, **characterized in that** the flow cross section remains essentially unchanged from when it is supplied to when it enters into the filter element (9).

3. The method according to claim 1 or 2, **characterized in that**, in the event of several lances (18), the lances (18) run parallel and spaced apart relative to each other, wherein the partial volume flows from the at least one lance (18) exit out of a plurality of outlet openings (19) equidistantly arranged over a length of the lance (18).

4. The method according to claim 3, **characterized in that** the test aerosol-containing volume flows supplied to the individual lances (18) are fed from a distribution channel (21) into the individual lances (18), wherein a volume flow streaming into the distribution channel (21) is guided through a flow straightener (22) prior to being distributed to the individual lances (18).

5. The method according to one of claims 1 to 4, **characterized in that** the clean gas flow is sprayed with a test aerosol by means of a second distribution device (17), and the raw gas flow generated in this way is guided to a second downstream filter element (9) of the filtering device (2).

6. A device (1, 1') for determining the filtration efficiency or performing a leak test in a filtering device (2) for filtering aerosols out of a gas volume flow, with a feeding device (16) that can be used to supply a test aerosol into a raw gas flow in front of a filter element (9) as viewed in the direction of flow of the gas volume flow, and with a deceiving element (24) that can be used to remove a partial volume flow from the clean gas flow in back of the filter element (9) as viewed in the direction of flow of the gas volume flow, wherein a particle number can be measured or a particle concentration of the test aerosol can be determined in the removed partial volume flow, and with a distribution device (17) that can be used to feed several partial volume flows containing the test aerosol into the raw gas flow, wherein the distribution device (17) exhibits at least one lance (18), which is respectively provided with a plurality of outlet openings (19) for a respective partial volume flow that are distributed in its longitudinal direction, and the lances (18) extend perpendicular to the direction of flow of the raw gas flow, run parallel to each other and are each spaced equidistantly apart from each other, **characterized in that** the flow cross section of the raw gas flow in the region of the at least one lance (18) deviates from the inlet cross section of a filter element (9) of the filtering device (2) by at most 20 %, preferably by at most 10 %.

7. The device according to claim 6, **characterized in that** the flow cross section is constant from when it is supplied to when it enters into the filter element (9)

8. The device according to one of claims 6 and 7, **characterized in that** the lances (18) are connected to a distribution channel (21) that is located outside of the flow cross section, and exhibits a flow straightener (22) situated in front of a first branch (A) of a lance (18).

9. The device according to one of claims 6 to 8, **characterized by** a second distribution device (17) for spraying the clean gas flow with a test aerosol, which is situated in front of a second filter element (9) of the filtering device (2) located downstream from the first filter element (9).

## Revendications

1. Procédé de détermination du degré d'élimination et/ou de réalisation d'un test de fuites dans un dispositif de filtration (2) pour l'élimination des poussières et des aérosols dans un débit volumique gazeux, dans lequel un aérosol de test est intégré au moyen d'un dispositif d'intégration (16) dans le sens d'écoulement, vu en amont d'un élément de filtration (9), dans un flux de gaz brut et une mesure d'un nombre de particules ou une détermination d'une concentration de particules est réalisée en aval, vu en aval de l'élément de filtration (9), dans le sens d'écoulement, dans un flux de gaz pur, l'intégration de l'aérosol se faisant au moyen d'un dispositif répartiteur (17) du dispositif d'intégration (16) et, à partir du dispositif répartiteur (17), plusieurs sous débits volumiques contenant plusieurs aérosols de test étant intégrés dans le flux de gaz brut, les sous-débits volumiques étant intégrés en les répartissant au moyen d'au moins une lance (18) régulièrement sur la section transversale d'écoulement et le sens longitudinal de l'au moins une lance (18) s'étendant perpendiculairement au sens d'écoulement du flux de gaz brut, **caractérisé en ce que** les sous-débits volumiques sont intégrés dans le flux de gaz brut à un point où une section transversale d'écoulement du flux de gaz brut diffère au maximum de 20 %, de préférence au maximum de 10 % d'une section transversale d'entrée de l'élément de filtration (9) du dispositif de filtration (2).

2. Procédé selon la revendication 1, **caractérisé en ce que** la section transversale d'écoulement ne change sensiblement pas depuis l'intégration jusqu'à l'entrée dans l'élément de filtration (9).

3. Procédé selon la revendication 1 ou 2, **caractérisé en ce que**, dans le cas où il y a plusieurs lances (18), les lances (18) s'étendent parallèlement et à distance les unes des autres, les sous-débits volumiques de l'au moins une lance (18) sortant d'une multitude d'orifices de sortie (19) disposés répartis à équidistance sur une longueur de la lance (18).

4. Procédé selon la revendication 3, **caractérisé en ce que** les débits volumiques contenant de l'aérosol de test est acheminé aux différente lances (18) sont intégrés à partir d'un canal de répartition (21) dans les différentes lances (18), un débit volumique affluant dans le canal de répartition (21) étant, avant sa répartition sur les différentes lances (18), guidé par un redresseur d'écoulement (22).

5. Procédé selon une des revendications 1 à 4, **caractérisé en ce que** le flux de gaz pur est sollicité au moyen d'un second dispositif répartiteur (17) avec un aérosol de test et que le flux de gaz brut ainsi généré est acheminé à un second élément de filtration installé en aval (9) du dispositif de filtration (2).

6. Dispositif (1, 1') de détermination du degré d'élimination et/ou de réalisation d'un test de fuites dans un dispositif de filtration (2) pour l'élimination d'aérosols dans un débit volumique gazeux, comportant un dispositif d'intégration (16) à l'aide duquel, dans le sens d'écoulement, vu en amont d'un élément de filtration (9), un aérosol de test peut être intégré dans un flux de gaz brut et comportant un élément récepteur (24) à l'aide duquel, dans le sens d'écoulement du débit volumique gazeux, vu en aval de l'élément de filtration (9), un sous-débit volumique peut être prélevé dans le flux de gaz pur, un nombre de particules pouvant être mesuré dans le sous-débit volumique prélevé ou une concentration de particules de l'aérosol de test pouvant être déterminée, et comportant un dispositif répartiteur (17) à l'aide duquel plusieurs sous-débits volumiques contenant plusieurs aérosols de test peuvent être intégrés dans le flux de gaz brut, le dispositif répartiteur (17) présentant au moins une lance (18) qui est pourvue respectivement d'une multitude d'orifices de sortie (19) disposés répartis dans son sens longitudinal pour respectivement un sous-débit volumique et les lances (18) s'étendant perpendiculairement au sens d'écoulement du flux de gaz brut, étant orientées parallèlement les unes par rapport aux autres et étant respectivement disposées à équidistance les unes des autres, **caractérisé en ce que** la section transversale d'écoulement du flux de gaz brut, au niveau de l'au moins une lance (18), diffère au maximum de 20 %, de préférence au maximum de 10 %, d'une section transversale d'entrée d'un élément de filtration (9) du dispositif de filtration (2).

7. Dispositif selon la revendication 6, **caractérisé en ce que** la section transversale d'écoulement est constante depuis l'introduction jusqu'à l'entrée dans l'élément de filtration (9).

8. Dispositif selon une des revendications 6 et 7, **caractérisé en ce que** les lances (18) sont raccordées à un canal de répartition (21) se trouvant en dehors de la section transversale d'écoulement et qui présente un redresseur d'écoulement (22) disposé en aval d'une première bifurcation (A) d'une lance (18).

9. Dispositif selon une des revendications 6 à 8, **caractérisé par** un second dispositif répartiteur (17) servant à solliciter le flux de gaz pur avec un aérosol de test et qui est disposé en amont d'un second élément de filtration (9) installée en aval du premier élément de filtration (9) du dispositif de filtration (2).
